# FASCICULE DE BREVET EUROPEEN

(11) **EP 0 415 808 B1**
(45) Date de publication et mention de la délivrance du brevet: **31.03.1993**
(21) Numéro de dépôt: 90402156.5
(22) Date de dépôt: 26.07.1990
(51) Int. Cl.: B60T 8/18

(54) **Pièce d'appui pour élément de suspension**
Stützvorrichtung für ein Radaufhängungsteil
Support for a suspension element

(30) Priorité: 31.08.1989 FR 8911420
(43) Date de publication de la demande: 06.03.1991
(73) Titulaire: ALLIEDSIGNAL EUROPE SERVICES TECHNIQUES, 93700 Drancy (FR)
(72) Inventeur: Castel, Philippe, Bendix Europe Services Tech., F-93700 Drancy (FR)

(56) Documents cités:
- EP-A- 0 283 328
- FR-A- 2 136 933
- FR-A- 2 164 115
- FR-A- 2 608 540
- GB-A- 1 317 539

## Description

La présente invention concerne une pièce d'appui pour élément de suspension pour véhicule automobile, faisant capteur de pression pour un correcteur de freinage à commande fluidique.

On connaît les correcteurs de freinage à commande fluidique pilotés par la suspension d'un véhicule. Le brevet GB-B-1 542 507 décrit par exemple un tel système. Pour un bon fonctionnement de ces correcteurs, le capteur de pression doit être simple, fiable et facile à installer sur le véhicule. Le document EP-A-0 283 328 décrit un tel capteur comportant une chambre annulaire de pression recevant un piston annulaire se déplaçant en fonction de l'effort perçu par la coupelle d'appui du ressort de suspension.

FR-A-2 608 540 propose un dispositif intégrant un correcteur disposé entre les spires du ressort de suspension et comportant une chambre de pression fermée coaxiale au dispositif. Toutefois, ce dispositif est extrêmement complexe, donc coûteux, et, en cas de fuite du fluide enfermé dans la chambre, le correcteur se comporte de façon préjudiciable à la sécurité.

Bien que donnant toute satisfaction, ces capteurs connus ne donnent que l'information de charge du ressort de suspension, et sont inefficaces notamment pour mesurer la charge sur la roue d'un véhicule à correction d'assiette, notamment intégrée à l'amortisseur.

De plus, ces capteurs de pression connus présentent tous un autre inconvénient. Ils comportent une chambre étanche dans laquelle la pression hydraulique est fonction de la charge supportée par l'élément de suspension, cet élément étant formé du ressort de suspension et/ou de l'amortisseur. Lorsque le véhicule roule sur une protubérance de la chaussée, la pression dans la chambre étanche augmente rapidement, puis décroit rapidement, correspondant au moment où les roues sont déchargées. Si la hauteur de la protubérance est grande et/ou si la vitesse du véhicule est élevée, les roues peuvent alors quitter le sol momentanément. L'élément de suspension travaille alors en traction, et la pression relative dans la chambre étanche peut s'annuler et même devenir négative, ce qui est préjudiciable d'une part à la membrane fermant la chambre étanche et d'autre part au fonctionnement du correcteur de freinage qui lui est associé.

La présente invention a pour but de remédier à ces inconvénients. L'invention a donc pour objet une pièce d'appui pour élément de suspension de véhicule automobile, faisant capteur de pression pour un correcteur de freinage à commande fluidique, et destinée à être montée entre un élément de suspension et une partie du véhicule, par l'intermédiaire d'un palier élastique ou d'un montage rotulant, et comportant un moyen de piston mobile à l'encontre de la pression régnant dans une chambre étanche.

Selon l'invention, des moyens sont prévus pour que la pression dans la chambre étanche soit supérieure à une pression prédéterminée.

Selon un premier mode de réalisation de l'invention, ces moyens sont constitués par l'application d'une surpression au fluide contenu dans la chambre étanche. Cette surpression peut être obtenue par l'utilisation de caoutchouc sous contrainte ou par un ressort de compression.

Selon un second mode de réalisation de l'invention, ces moyens sont constitués par une butée limitant la course du moyen de piston.

L'invention sera mieux comprise et d'autres buts, avantages et caractéristiques de celle-ci apparaîtront plus clairement à la lecture de la description qui suit de modes préférés de réalisation donnés à titre non limitatif en références aux dessins dans lesquels :
- la Figure 1 représente schématiquement en coupe un premier mode de réalisation d'une pièce d'appui conformément à l'invention ;
- la Figure 2 représente schématiquement en coupe un deuxième mode de réalisation d'une pièce d'appui conformément à l'invention ;
- la Figure 3 représente schématiquement en coupe un troisième mode de réalisation d'une pièce d'appui conformément à l'invention ;
- la Figure 4 représente schématiquement en coupe un quatrième mode de réalisation d'une pièce d'appui conformément à l'invention ;
- la Figure 5 représente schématiquement en coupe une variante du mode de réalisation de la Figure 3.

Sur les différentes Figures, les pièces identiques sont repérées par le même numéro.

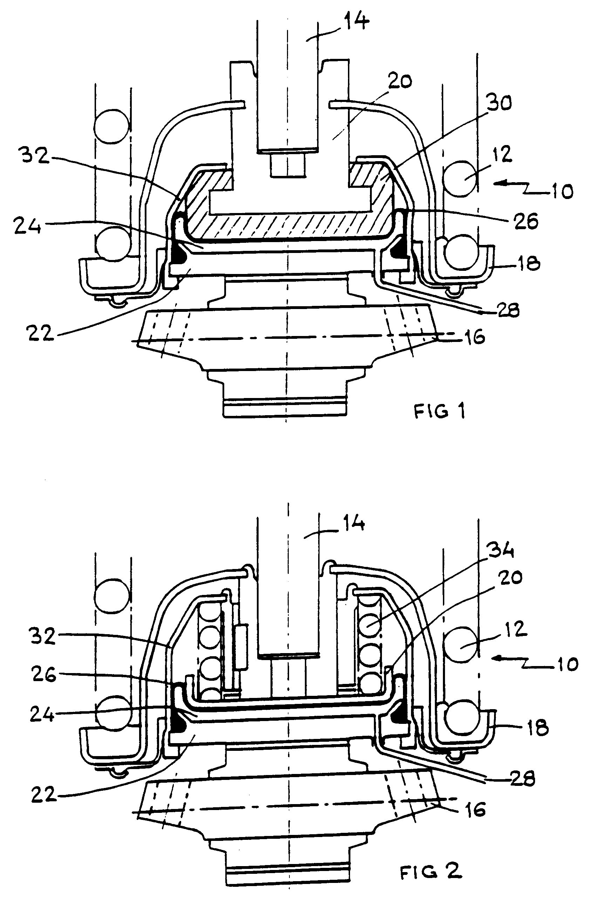

En référence à la Figure 1, on a représenté une pièce d'appui 10, interposée entre l'extrémité d'un ensemble de suspension constitué dans cet exemple d'un ressort de suspension 12 et d'un amortisseur 14, et un "silentbloc" ou palier élastique 16. Le ressort de suspension 12 s'appuie sur la périphérie d'une coupelle 18. Cette coupelle 18 est solidaire d'un piston 20, lui-même solidaire de l'extrémité de l'amortisseur 14. Le piston 20 détermine avec la base 22 de la pièce d'appui une chambre étanche 24 grâce à une membrane déroulante 26 dont le bord périphérique est serti sur la base 22. La chambre étanche 24 est reliée par un conduit 28 à la chambre de commande d'un correcteur de freinage à commande fluidique (non représenté sur les Figures).

La pression du fluide hydraulique contenu dans la chambre 24 est donc représentative de la charge de l'ensemble de suspension 12,14, et donc de la roue associée à cet ensemble de suspension. On voit ainsi que lorsque l'ensemble de suspension est soumis à des efforts de traction, la pression dans la chambre 24 peut s'annuler, et des phénomènes de cavitation peuvent apparaître, nuisant à la fois au déroulement de la membrane 26 et au fonctionnement du correcteur de freinage relié au conduit 28.

Conformément à l'invention, il est prévu un seuil au dessous duquel la pression dans la chambre 24 ne peut pas descendre, ce seuil étant obtenu par une précontrainte appliquée au fluide dans la chambre 24.

Selon le mode de réalisation de la Figure 1, la tête du piston 20 est entourée d'une couche de matériau élastique tel que du caoutchouc 30. Une coupelle 32 est fixée sur la base 22, par exemple par vissage et appuie sur la tête du piston 20 du côté opposé à celui qui forme la chambre 24. Le caoutchouc est ainsi sous contrainte, et transmet cette contrainte au fluide situé dans la chambre 24, même lorsque l'ensemble de suspension 12,14 travaille en traction par rapport au palier élastique 16. Lorsque la charge sur la roue, et donc sur l'ensemble de suspension associé, reprend sa valeur initiale, la membrane 26 occupe sa position normale et ne risque pas de former des plis.

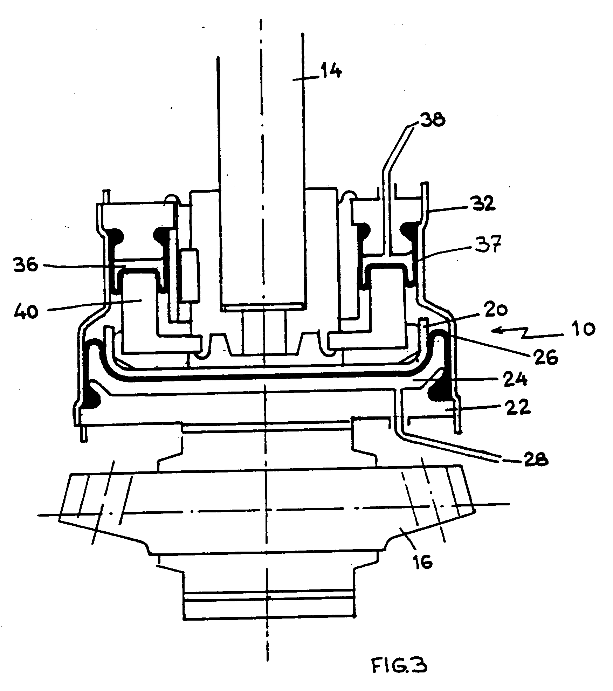

Selon le mode de réalisation de la Figure 2, la précontrainte est appliquée au fluide contenu dans la chambre 24 par un ressort 34, comprimé entre la coupelle 32 et le piston 20.

Selon le mode de réalisation de la Figure 3, la précontrainte appliquée au fluide de la chambre 24 est obtenue par la mise sous pression d'un fluide dans une autre chambre étanche. Cette pression peut être maintenue constante par tout moyen connu, ou, en variante, peut être la pression du fluide contenu dans la chambre étanche d'une autre pièce d'appui faisant capteur de pression. Cette variante pourra trouver son application dans le cas de véhicules dans lesquels l'amortisseur 14 n'est pas logé à l'intérieur du ressort de suspension, afin de donner l'information de la charge totale sur la roue. Selon le mode de réalisation de la Figure 3, la coupelle 32 est munie sur sa paroi intérieure en regard du piston 20 d'une chambre étanche annulaire 36 reliée par une canalisation 38 à une source de fluide hydraulique sous pression et fermée par une membrane annulaire 37, tandis que le piston 20 est muni, sur la face opposée à celle qui définit la chambre 24, d'une pièce annulaire 40 coopérant avec la chambre 36. La pression régnant dans la chambre annulaire 36 est ainsi transmise au piston 20, de sorte que la chambre 24 ne peut se trouver en dépression. Un tel système de chambre annulaire 36 et de pièce annulaire de réaction 40 peut évidement être utilisé dans les modes de réalisation des Figures 1 et 2 pour remplacer la partie en caoutchouc 30 ou le ressort 34. De façon avantageuse, la chambre 36 peut être reliée à une autre pièce d'appui soumise à la charge d'un ressort de suspension, et la pression dans la chambre 24 sera alors représentative de la charge totale de la roue associée.

La Figure 5 représente une variante du mode de réalisation de la Figure 3, selon laquelle l'amortisseur (non représenté sur cette Figure 5) est relié, par l'intermédiaire du palier élastique 16 au piston 20 qui dans cet exemple est annulaire, d'axe X-X. Le piston 20 détermine avec la base 22 de la pièce d'appui une chambre étanche 24 grâce à une membrane 26 qui, dans cette variante, est annulaire. La coupelle 32, elle aussi annulaire dans cette variante, est munie sur sa paroi intérieure en regard du piston 20, d'une chambre étanche annulaire 36 reliée par une canalisation 38 à une source de fluide hydraulique sous pression, et fermée par une membrane 37, la face arrière du piston 20 forme elle-même la pièce annulaire 40 coopérant avec la chambre 36, de façon à ce que la pression dans chambre 24 ne puisse descendre en dessous d'une valeur prédéterminée. Comme dans les autres modes de réalisation, la base 22 est fixée à une partie de véhicule constituée soit d'un bras de suspension, soit du chassis. De façon avantageuse, on pourra prévoir que les membranes annulaires 26 et 37 soient identiques.

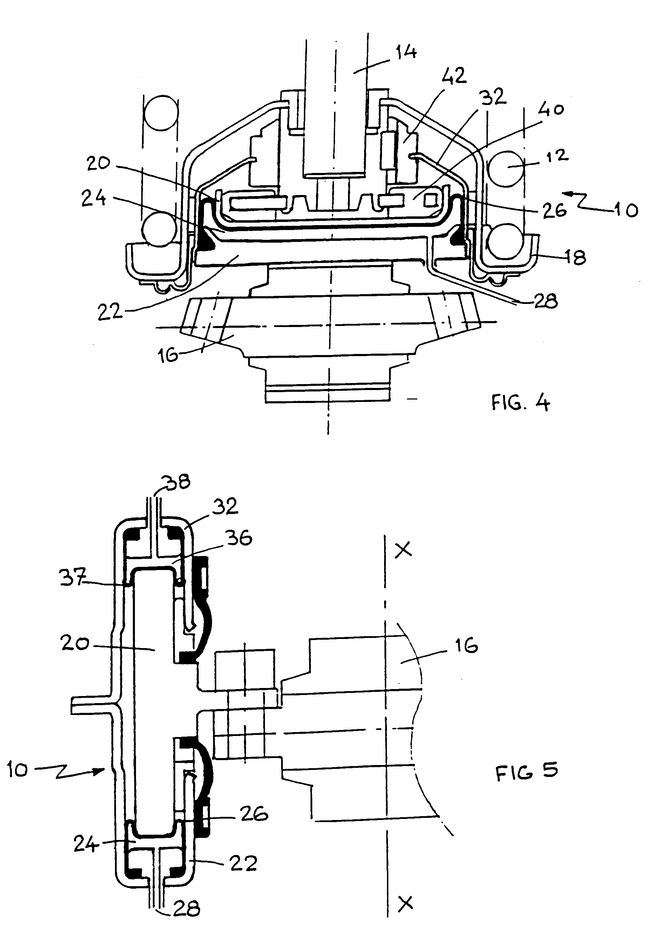

La Figure 4 représente un autre mode de réalisation dans lequel la face du piston 20 opposée à celle qui définit la chambre 24 est garnie de caoutchouc 40, tandis que la coupelle 32 est solidaire d'une butée 42, limitant la course du piston 20 lorsque l'ensemble de suspension travaille en traction. Un ressort de compression pourrait être disposé entre la coupelle 32 et la garniture 40.

Avec les modes de réalisation décrits, on obtient une pièce d'appui pour élément de suspension formant capteur de pression pour correcteur de freinage dont la fiabilité est assurée quelles que soient les conditions de fonctionnement et donnant l'information de charge recherchée.

Bien que quelques modes préférés de réalisation de l'invention aient été décrits, il est évident que de nombreuses modifications pourront être apportées par l'homme du métier dans le cadre des revendications. Par exemple le "silentbloc" ou palier élastique a été représenté entre la pièce d'appui et le chassis, mais pourrait être monté entre le pied de l'amortisseur et la pièce d'appui. De même, un montage rotulant peut être utilisé à la place du palier élastique, enfin la pièce d'appui peut être disposée à l'accrochage supérieure de l'amortisseur, entre l'amortisseur et le chassis, ou à l'accrochage inférieur, entre l'amortisseur et le bras de suspension.

## Revendications

1. Pièce d'appui pour ensemble de suspension de véhicule automobile, faisant capteur de pression pour un correcteur de freinage à commande fluidique et destinée à être montée entre un élément de suspension (12,14) et une partie du véhicule par l'intermédiaire d'un palier élastique (16) ou d'un montage rotulant, comportant un moyen de piston (20) mobile à l'encontre de la pression régnant dans une chambre étanche (24), caractérisée en ce que des moyens (30,34,36,40,42) sont prévus pour que la pression dans la chambre étanche (24) soit supérieure à une pression prédéterminée.

2. Pièce d'appui selon la revendication 1, caractérisée en ce que les moyens sont constitués par l'application d'une surpression au fluide contenu dans la chambre étanche (24).

3. Pièce d'appui selon la revendication 2, caractérisée en ce que la surpression dans la chambre étanche (24) est créée par une couche de matériau élastique (30) disposé sur le moyen de piston (20).

4. Pièce d'appui selon la revendication 2, caractérisée en ce que la surpression dans la chambre étanche (24) est créée par un ressort (34) disposé entre le moyen de piston (20) et une coupelle (32).

5. Pièce d'appui selon la revendication 2, caractérisée en ce que la surpression dans la chambre étanche (24) est créée par la pression régnant dans une seconde chambre étanche (36).

6. Pièce d'appui selon la revendication 1, caractérisée en ce que les moyens sont constitués par une butée limitant la course du moyen de piston.

7. Pièce d'appui selon l'une des revendications 1 à 6, caractérisé en ce que l'élément de suspension est un ressort de suspension.

8. Pièce d'appui selon l'une des revendications 1 à 6, caractérisée en ce que l'élément de suspension est un amortisseur.

9. Pièce d'appui selon l'une des revendications 1 à 6, caractérisée en ce que l'élément de suspension est constitué d'un ressort de suspension disposé autour d'un amortisseur.

10. Pièce d'appui selon l'une quelconque des revendications 1 à 9, caractérisée en ce que la partie du véhicule est constituée par un bras de suspension du véhicule.

11. Pièce d'appui selon l'une quelconque des revendications 1 à 9, caractérisée en ce que la partie du véhicule est constitué par le chassis du véhicule.

12. Pièce d'appui selon l'une quelconque des revendications précédentes, caractérisée en ce que la seconde chambre étanche (36) est soumise à la pression engendrée par un capteur de pression.

## Patentansprüche

1. Stützteil für eine Radaufhängungsanordnung eines Kraftfahrzeugs, das einen Druckmeßwertgeber für einen Bremskraftregler mit hydraulischem Antrieb bildet und vorgesehen ist, zwischen einem Radaufhängungselement (12, 14) und einem Teil des Fahrzeugs mittels eines elastischen Lagers (16) oder eines kugelgelenkartigen Aufbaus angebracht zu werden, und ein Kolbenmittel (20) enthält, das sich unter Einwirkung des Drucks bewegt, der in einer dichten Kammer (24) vorherrscht, dadurch gekennzeichnet, daß Mittel (30, 34, 36, 40, 42) vorgesehen sind, damit der Druck in der dichten Kammer (24) oberhalb eines vorgegebenen Drucks liegt.

2. Stützteil nach Anspruch 1, dadurch gekennzeichnet, daß die Mittel durch das Anlegen eines Überdrucks auf die in der dichten Kammer (24) enthaltene Flüssigkeit gebildet werden.

3. Stützteil nach dem Anspruch 2, dadurch gekennzeichnet, daß der Überdruck in der dichten Kammer (24) durch eine Schicht aus elastischem Material (30) erzeugt wird, die auf dem Kolbenmittel (20) angeordnet ist.

4. Stützteil nach dem Anspruch 2, dadurch gekennzeichnet, daß der Überdruck in der dichten Kammer (24) durch eine Feder (34) erzeugt wird, die zwischen dem Kolbenmittel (20) und einer Schale (32) angeordnet ist.

5. Stützteil gemäß dem Anspruch 2, dadurch gekennzeichnet, daß der Überdruck in der dichten Kammer (24) durch einen Druck erzeugt wird, der in einer zweiten dichten Kammer (36) vorherrscht.

6. Stützteil nach dem Anspruch 1, dadurch gekennzeichnet, daß die Mittel durch einen Anschlag gebildet sind, der die Bewegung des Kolbenmittels begrenzt.

7. Stützteil nach einem der Ansprüche 1 bis 6, dadurch gekennzeichnet, daß das Radaufhängungselement eine Tragfeder ist.

8. Stützteil gemäß einem der Ansprüche 1 bis 6, dadurch gekennzeichnet, daß das Radaufhängungselement ein Stoßdämpfer ist.

9. Stützteil gemäß einem der Ansprüche 1 bis 6, dadurch gekennzeichnet, daß das Radaufhängungselement aus einer Tragfeder gebildet wird, die um einen Stoßdämpfer herum angeordnet ist.

10. Stützteil gemäß einem beliebigen der Ansprüche 1 bis 9, dadurch gekennzeichnet, daß das Fahrzeugteil durch einen Aufhängearm des Fahrzeugs gebildet wird.

11. Stützteil gemäß einem beliebigen der Ansprüche 1 bis 9, dadurch gekennzeichnet, daß das Fahrzeugteil durch das Fahrgestell des Fahrzeugs gebildet wird.

12. Stützteil gemäß einem beliebigen der vorhergehenden Ansprüche, dadurch gekennzeichnet, daß die zweite dichte Kammer (36) dem Druck unterworfen ist, der von einem Druckmeßwertgeber erzeugt wird.

## Claims

1. Bearing piece for a suspension unit of a motor vehicle, acting as a pressure sensor for a fluid-controlled brake regulator and intended to be mounted between a suspension element (12, 14) and a part of the vehicle by means of an elastic bearing (16) or a pivoting mounting, having a piston means (20) which can move counter to the pressure prevailing in a leaktight chamber (24), characterized in that there are provided means (30, 34, 36, 40, 42) so that the pressure in the leaktight chamber (24) is greater than a predetermined pressure.

2. Bearing piece according to Claim 1, characterized in that the means consist of the application of an overpressure to the fluid contained in the leaktight chamber (24).

3. Bearing piece according to Claim 2, characterized in that the overpressure in the leaktight chamber (24) is created by a layer of elastic material (30) arranged on the piston means (20).

4. Bearing piece according to Claim 2, characterized in that the overpressure in the leaktight chamber (24) is created by a spring (34) arranged between the piston means (20) and a cup (32).

5. Bearing piece according to Claim 2, characterized in that the overpressure in the leaktight chamber (24) is created by the pressure prevailing in a second leaktight chamber (36).

6. Bearing piece according to Claim 1, characterized in that the means consist of a stop limiting the stroke of the piston means.

7. Bearing piece according to one of Claims 1 to 6, characterized in that the suspension element is a suspension spring.

8. Bearing piece according to one of Claims 1 to 6, characterized in that the suspension element is a shock absorber.

9. Bearing piece according to one of Claims 1 to 6, characterized in that the suspension element consists of a suspension spring arranged around a shock absorber.

10. Bearing piece according to any one of Claims 1 to 9, characterized in that the part of the vehicle consists of a suspension arm of the vehicle.

11. Bearing piece according to any one of Claims 1 to 9, characterized in that the part of the vehicle consists of the chassis of the vehicle.

12. Bearing piece according to any one of the previous claims, characterized in that the second leaktight chamber (36) is subjected to the pressure generated by a pressure sensor.
